# EUROPEAN PATENT APPLICATION

(11) **EP 1 253 524 A1**
(43) Date of publication of application: **30.10.2002**
(21) Application number: 02076539.2
(22) Date of filing: 19.04.2002
(51) Int. Cl.: G06F 17/00, G06F 17/60

(54) **A knowledge based system and a method of business modeling and of business process redesign**

(30) Priority: 23.04.2001 EP 01201462
(71) Applicant: Koninklijke KPN N.V., 9726 AE Groningen (NL)
(72) Inventor: Stok, Cornelis Johannes, 2261 HW Leidschendam (NL); Dikker, Frank, 7581 TW Losser (NL)
(74) Representative: Wuyts, Koenraad Maria

(57) **Abstract**

A knowledge-based system compiled on a computer environment or stored on a memory carrier is disclosed. The knowledge-based system comprises a representation of at least one business service and said representation including a representation of the business processes within said service and a representation of resources needed for executing said business processes, said representation further including a representation of the communication between said processes; and means for analyzing an impact of a model change in at least one of said processes and/or in at least one of resources and/or in at least one of said communication or interdependency on at least one other of said processes and/or said resources and/or said communication or interdependency.

## Description

### FIELD OF THE INVENTION

The present invention is related to the field of knowledge-based or expert systems and to methods of business planning and/or business process redesign. More in particular a novel knowledge-based system and novel methods of business process modelling and business process redesign for impact analysis are disclosed.

### BACKGROUND

Knowledge or expert systems and methods of business planning and/or business process design are known in the art. Examples of such knowledge or expert systems are the business process modeling tool WORKFLOW MODELER of the company METASOFT, and SILVERRUN-BPM. Such knowledge or expert systems are used for simulating a business process, for example to pinpoint critical paths and bottlenecks and to identify opportunities for improvement.

US Patent No. US5819270 discloses a computer system for displaying representations of processes including models of complex business transactions in an information management system. The representations include an indication of processes into which a process is decomposed. Dependencies among processes in a decomposition are indicated along with associated coordination processes ; an indication of where a process is used within another process may also be provided.

The article "Business process re-engineering (BPR) - A study of the software tools currently available" - P. Bradley et al, Computers in Industry, Vol 25. No. 3, March 1995, pp. 309-330 gives an overview of numerical simulation tools. Those tools are used to determine changes in performance.

### PROBLEM DEFINITION AND AIM

There is a need in the art to be able to model business processes in a company or business processes inbetween companies, and to model business services including business processes. There is a need in the art to perform such modeling in a consistent way. A fully worked out, consistent modeling of business services and processes can enable for example better simulations or what-if analyses of such services and processes. A fully worked out, consistent modeling of business services and processes can enable a better design or redesign of such services and processes. Such simulations and such design based on a consistent modeling will enable companies to reduce operating costs as business bottlenecks and critical paths are recognized prior to such problems actually occur. As a result companies can offer a better service to their customers and often be able to reduce the service or product prices invoiced to customers.

A relevant simulation of business processes and services however is to be based on a consistent modeling of the business processes and services. Such consistent modeling can be based on an implementation within the modeling tool of the communication and interdependency of the different processes and optionally subprocesses within a business service. Such consistent modeling furthermore can need within the modeling tool an implementation of the resources needed for executing or achieving the processes. A consistent implementation of communication and of resources can enable the above-identified goals.

There is however a further need in the art to analyze the consistency of the business models as referred to hereabove. Also, in the process of business design or of business redesign, there is a need for analyzing the consequences of changes in the business models. A consistent modeling of communication and/or or resources needs the possibility of an evaluation of the impact of a model change in the business models that are used. The model change can be a change in at least one of said processes and/or in at least one of resources and/or in at least one of said communication on at least one other of said processes and/or said resources and/or said communication. Analyzing the impact of said change can enable the early detection of potential problems and thus avoiding unnecessary iterations. As a consequence a faster design of the business processes and services is made possible and hence the time to market of the associated development can be reduced. The step of analyzing the impact of said change preferably includes the steps of assisting the designer of the process in the analysis by (a) designating an, optionally each, individual potential impact of said change at preferably the lowest level of the process design and (b) providing an overview of changes already made and potential impacts still to handle.

The problem of the need for analyzing the consequences of changes in the business models also has the following aspect. A business service is composed of business processes (possibly containing subprocesses) that each need resources such as hardware, computer systems and people for executing parts of the process functions. It is often needed to evaluate how through changes, changes that are as cost effective as possible and therefore often as minimal as possible, how through changes in an existing process a business service can be improved, or made cheaper. Thereto it is needed to systematically and consistently analyze the changes in the whole business service if a model change is made somewhere in the business service. The systematic and consistent changes are to be recorded or highlighted for the one, for example an expert, that is planning the business service and for each of these changes a decision or examination is to be done. It is furthermore needed to achieve completeness in analyzing the changes in the whole business service if a model change is made somewhere in the business service is also important because one can only simulate what has been modelled. It is an aim of the invention to disclose an approach that aims at being consistent and complete on the communication between (sub)processes. An expert can be complementary to be complete and consistent on a single subprocess. In this way, a balance is created between experts being expert on their discipline and the model guarding the consistency of all activities.

There is also a need in the art to evaluate the status of a business service or the status of a business process or subprocess in business modeling tools, the status being related to a status resulting from a specific set of input parameters. A consistent and complete implementation of communication and of resources can enable the achievement of a trustful status of a business service or process or subprocess.

### SUMMARY

The above-identified goals can be achieved, a number thereof or only one or all of them through the availability of a business modeling tool that is implemented or compiled on a computer environment as a knowledge-based or expert system. Such system can also be stored on a memory carrier. The knowledge-based system can comprise a representation of at least one business service and said representation including a representation of the business processes within said service and a representation of resources needed for executing said business processes, said representation further including a representation of communication between said processes. Preferably the (de)compositions of processes and communications are function preserving, i.e. the combination of the functions of subprocesses constituting a compound process should be equal to the function of that compound. The system can further comprise means for analyzing an impact of a change, preferably a model change, in at least one of said processes and/or in at least one of said resources and/or in at least one of said communication on at least one other of said processes and/or said resources and/or said communication. The means for analyzing impact can comprise means for assisting the designer of the process in the analysis by (a) designating an, optionally each, individual potential impact of said change at preferably the lowest level of the process design and (b) providing an overview of changes already made and potential impacts still to handle. The knowledge-based system of the invention in a preferred embodiment uses a reasoning algorithm combined with a functional process modeling approach. The knowledge-based system of the invention can have the following aspects:
- An algorithm that determines the impact of changes in processes, flows and/or resources for substantially the complete collection of existing processes that use a common collection of resources (the installed base), not just for the process at hand.
- Impact is determined by logical inference mechanism, not by means of a symbolical/numerical simulation.
- The output of the algorithm comprises a substantially complete list of all the processes that will be potentially disturbed by the proposed changes in flows and/or resources, not a list of process parameter values.
   It is understood in the sequel that the interdependency between processes or subprocesses is part of communication between processes. Business model changes can include, or can be a combination of changes such as additions, modifications or deletions in an input- or output information flow. Business model changes can include, or can be a combination of changes such as additions, modifications or deletions in processes or in subprocesses or in resources or in communication between the processes. Business model changes can also include, or can be a combination of changes such as additions, modifications or deletions in the function of a business process. Business model changes can also include any combination of the above-referred. A change in the model of a business service or business processes possibly can relate to any change or modification like a new type of customer order, a new type of error in transcription or non-availability of infrastructure or of new or modified software components that monitor or that are part of the infrastructure. A change can also be a new signal of an exhaustion of stock or any other change in the business processes of the service. Further typical examples include : the introduction of new services possibly using processes and resources of existing services as much as possible ; redesign or automation of a number of business (sub)processes ; replacement of a computersystem by another. In an optional embodiment of the invention the changes can also relate to changes like a new customer order or an error in transcription. The word 'communication' referred to hereabove and in the sequel can have, apart from its usual meaning of exchange of information, a meaning of exchange of goods or money or the like.

The knowledge-based system can, in the means for analyzing the impact of a model change, contain means for propagating the model change throughout said representation according to consistency rules. The consistency rules can be part of the representation. As a result hereof, other processes are changed as well. These other processes are potential places of impact. These other processes, or the input/output functions thereof or the communication can receive a label of 'to do' according to the consistency rules. The user of the knowledge-based system can then examine and/or decide what additionally is to be changed in the changed business model. This decision/examination aspect can also be fully or partly automated be implemented in the knowledge-based system according to expertise intelligence rules. Essentially all the changes in the representation resulting from the model change can subsequently or at the same time be indicated on a user interface connected to said knowledge based system. In this way, also the analysis and impact of the introduction of new business services that are based on existing processes, or that share subprocesses and resources of existing processes, can be done. The knowledge-based system therefore preferably includes means to impose logically correct (de)composition rules for processes, in combination with the automated reasoning mechanism for determining impact. The knowledge-based system therefore can be used to determine consequences for (impact on) existing processes that collectively use the same resources. The system uses symbolic reasoning mechanisms to infer the logical consequences of changes in process models.

Changes to the processmodel can come from different design teams and have different version such as planned, agreed upon or definitive, including a planning when changes become actual. In this way, the version of the business service or process or subprocess can be projected in any moment of time, also in future. As such different business service/process design teams concurrently can work on the implementation of a change in the model of the business service/process. As such quantitative predictions of model changes on a business service or process or subprocess are possible.

The means for analyzing impact of a model change can be the availability of software code or a specific software module in any of the software coding environments known to the person skilled in the art that enables to analyze such impact. Such means can be implemented as methods of an object in an object oriented programming environment such as C++. Such means can also be or include a database or a relational database that stores the known information or knowledge about relations between processes and/or said resources and/or communication or interdependency. Such database stores the knowledge or information about the business service or the business proces/subprocess and can be referred to as an installed base or as a semantic reference point. Such information is to be gathered and stored or modelled consistently in the database. The database can be accessed for queries or by other parts of software code. The known relations that are stored or modelled can be the communication in itself but may also comprise other relations such as heuristic relations or association or concurrency relations. The representations of the business processes within said service and the representation of resources needed for executing said business processes, and the representation of the communication can also be done within software code or software modules. This software code or software modules can be performed or programmed or executed or implemented within the same software environment as wherein the means for analyzing impact are implemented. This software code or software modules can also be implemented or programmed or executed in a different software environment that can communicate with the software environment chosen for the implementation of said means for analyzing impact. In the example given above of the implementation of the means as methods of an object in an object oriented programming environment such as C++, the representation of the business processes within said service and the representation of resources needed for executing said business processes, and optionally the representation of the communication can be implemented as objects or classes of objects within the object oriented programming environment. Within such object oriented programming environment, objects can be refined, which means that these objects can get more detail or can be deduced one from another. The knowledge-based system recited hereabove can in an implementation have the communication between said processes represented as a set of input/output functions in/out each of said processes, and wherein the input function of essentially each process is the output function of another process or wherein the output function of essentially each process is the input function of another process.

The knowledge-based system can comprise a link to a user-interface such as a screen of a computer, a display connected to a computer environment, a world-wide-web access, a telephone with or without a display, or a mobile telephone. The knowledge-based system can also be stored on a memory carrier such as a floppy disk or a CD-ROM or CD-I or a computer mainframe or a PC or a single chip memory such as an EEPROM or a flash memory. It can also be distributed over a number of computer environment or memory carriers and accessed along a central entry such as the world-wide-web. The knowledge-based system can be accessed through said user-interfaces.

In an embodiment of the knowledge-based system it can be foreseen that the knowledge-based system can be used either in impact mode either as a system or database for retrieving information about the service or process that is stored. In an embodiment of the knowledge-based system it can be foreseen that the impact analysis can be executed in a zooming option wherein only parts of processes or subprocesses are analyzed or wherein a number of subprocesses or processes or deactivated. In an embodiment of the knowledge-based system it can be foreseen that in an impact session a history is stored of decisions that have been taken in the design based on the impact analysis. Through requesting a history of such decisions it is possible to update or change or modify such decisions and renew or further prosecute the impact analysis.

The above-identified goals can be achieved, a number thereof or only one or all of them through a method of designing a business service, the method comprising the steps of representing the business processes within said service and the resources needed for executing said business processes ; and representing the interdependency and communication between said processes as a set of input/output functions in/out each of said processes, and wherein the input function of essentially each process is coupled to, or in an embodiment is the output function of another process. In an embodiment, such method can further comprise the steps of determining at least one status of said service by inputting a set of parameters in said functions, and storing the resulting status of said service. The method can further comprise the step of analyzing an impact of a change in at least one of said processes and/or in at least one of said resources and/or in at least one of said communication or interdependency on at least one other of said processes and/or said resources and/or said communication or interdependency.

Further is disclosed in the present patent application a method of analyzing business processes and/or resources as part of a business service. The method can comprise the steps of representing the business processes within said service and the resources needed for executing said business processes ; and representing the interdependency and communication between said processes as a set of input/output functions in/out each of said processes, and wherein the input function of essentially each process is the output function of another process ; and comparing a first and a second status of said business service, said first and said second status being determined through inputting a set of parameters in said functions prior to and after a model change, a business model change, the result of said comparing step possibly being used in the planning or modelling of said business processes and/or resources. The comparison of these status can be used for example in a process sensitivity analysis. By comparing a number of status, for example through a simulation session that is based on the design-of-experiments methodology, it can be seen how a business responds to model changes. As such the important model parameters of a business model can be determined.

The evaluation of the status of a business service or of the processes or subprocesses therein and the evaluation of the impact of a change in one of the business service or processes or subprocesses or one of the constituents thereof will enable a faster design of a business service or process or subprocess, or can support the cooperation between designers working on the same design. As a result companies can offer a better service to their customers and often be able to reduce the service or product prices invoiced to customers. The knowledge-based system and the method of process design referred to hereabove can be used for business services or processes such as the offering of telephony services, in finance applications, for insurance services but also in actual production environments such as the automotive industry or the chemical industry.

The features of the above-described aspects and embodiments of the invention can be combined.

### BRIEF DESCRIPTION OF THE DRAWINGS

Figure 1 : shows a functional scheme of a telephony service.
Figure 2 : shows schematically an embodiment of the interdependency of processes and subprocesses.
Figure 3 : shows a functional flow diagram of the impact method according to an embodiment of the invention.
Figure 4 : shows an object model of the installed base process model according to a best mode embodiment of the knowledge-based system of the invention.
Figure 5 : shows a schematic overview of elements of a best mode embodiment of the knowledge-based system of the present invention.

### DETAILED DESCRIPTION OF PREFERRED EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing from the true spirit of the invention, the scope of the invention being limited only by the appended claims as finally granted.

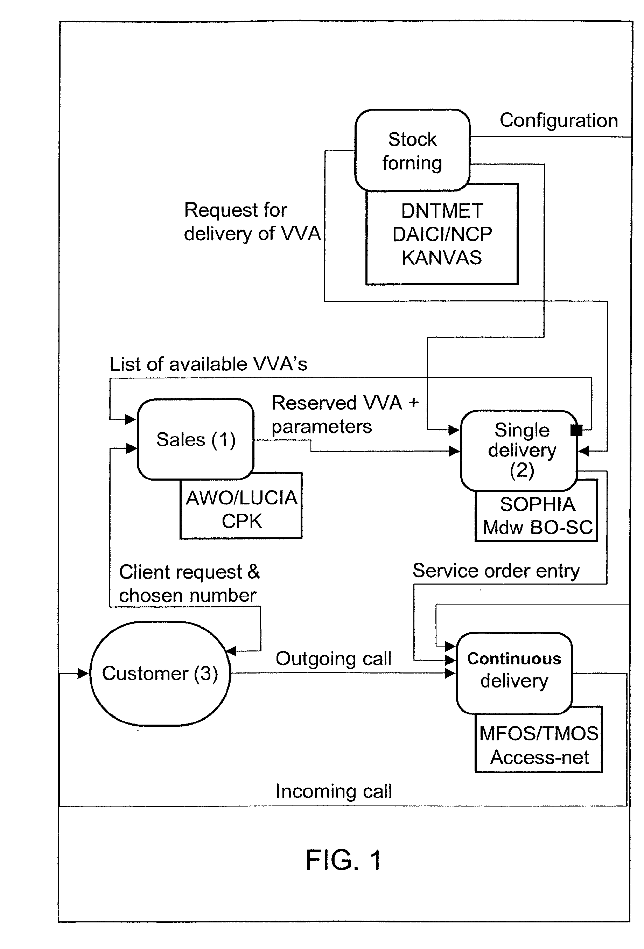

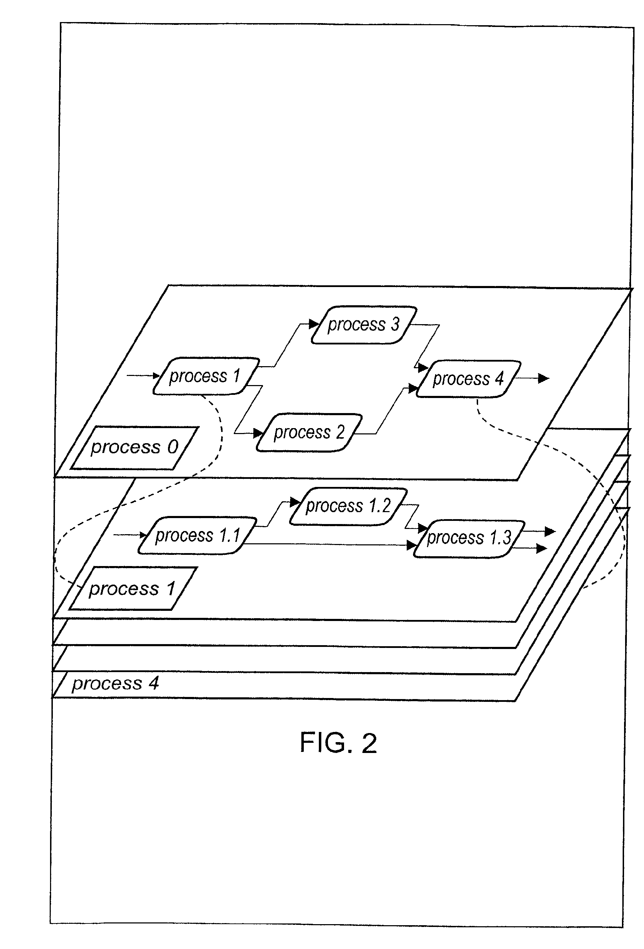

In an example embodiment of the invention, a telephony service is described. A telephony service can be divided in a number of processes including Sales, Delivery of Connection, Stock Management including stock development and maintenance. The telephony service is divided in a number of processes and in order to achieve a consistent modeling of the business service, the interdependency and communication between the processes is detailed starting from a functional description of the processes. The same holds for the subprocesses of one process. Figure 1 shows according to the embodiment of a telephony service a functional scheme of a telephony service as part of a knowledge-based system of the present invention. The processes are shown as rounded objects that have an input function with a communication flow of information and an output function with a communication flow of information. Resources are attached to the processes (indicated as square objects) and the output functions are a logical deduction of the input functions as processed according to process rules and the available resources. As shown in the logical scheme of figure 2, each of the processes of figure 1 can be composed of different subprocesses with a predetermined interdependency. Figure 1 shows in detail how part of the business service is executed. The subsequent processes of the making, offer and delivery of VVA's [VVA stands for a completely prepared telephone connection] is shown. The sales department (1) requests and receives the available WA's from the department Delivery (2). The customer (3) chooses out of the available VVA's and the chosen number is reserved in the sales department (1). This reservation is forwarded to the department Delivery (2) and here a service order entry is made.

For each of the main processes from figure 1, detailing is possible in terms of the constituting subprocesses. In most cases, said subprocesses will be capable of being further refined to more detailed process descriptions. The result is a hierarchy of processing models at several levels of abstraction (figure 2). According to need, there may be zoomed into a process, or, conversely, zoomed out into the more ample relationshipnction with associated processes.

Thus the service is modeled as a set of communicating processes/subprocesses wherein a consistent mapping of the information flows in/out the processes/subprocesses is executed and wherein the functionality of the service can be deduced from the functions of the processes/subprocesses. Also the resources needed to enable the process/subprocess are mapped. The communication and interdependency between said processes is represented as a set of input/output functions in/out each of said processes, and optionally in/out each of said subprocesses. The output/input function of essentially each process or subprocess is coupled to the input/output function of another process or subprocess. In a preferred ambodiment, the output/input function of essentially each process or subprocess is the input/output function of another process or subprocess. A functional modeling of the information or knowledge about the business service is the basis for the installed base, for example a relational database. Such installed base can be described by means of a model. Such consistent modeling or mapping of the information about and knowledge about a service enables an analysis of the model impact of a change in one of the processes or resources or the communication or interdependency therebetween on at least one other of said processes and/or said resources and/or said communication or interdependency.

The analysis of impact can have different aspects of analysis. A first mode can be an analysis of the different places in the service that are impacted by a change in one resource or process or subprocess. A second mode of analysis can be an analysis of input/output functions that are impacted by a change. A third mode of operation can be an analysis of needed modifications in resources in order to cope with such change. A fourth mode of operation can be an analysis of what is to be changed in the processes themselves. The impact analysis based on a consistent modeling and based on a consistency rules check, alleviates the need for a process design manager to evaluate in a long-chain hand-crafted analysis all possible influences on a service by one change.

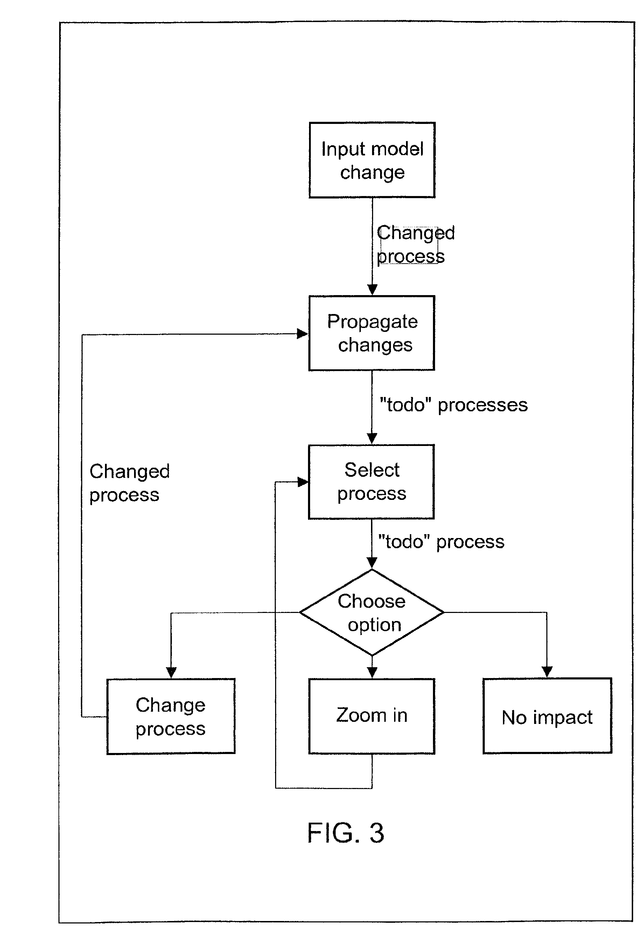

In the sequel, an embodiment of the impact method is described in more generality than the example embodiment of a telephony service. The basis for this method is a functional, consistent process model of the installed base of a business service or of a company. The impact method can be started by a user of the knowledge-based system of the invention through a user interface thereto. The user makes an initial model change to a process of the process model of the Installed Base. A model change for example can be one or a combination of:
1) Change (or addition or deletion) of an input- or output information flow.
2) Change of the process function ( relation between the input- and output flow) input/output).
3) Change (or addition or deletion) of a resource.
4) Change (or addition or deletion) of a (sub)process.
After the user has applied the model change, the knowledge-based system propagates the changes through the model on the basis of the consistency rules of the model. As a result, other processes are changed as well. These processes are potential places of impact. Their status is changed into "todo". Propagation is applied both externally to determine the consequences for other processes as well as internally to determine the consequences for the sub-processes of the process. The external propagation rules are:
1) Change of an output flow results in an equivalent change of the connected input flows.
2) Change of an input flow results in an equivalent change of the connected output flows.
3) Change of a resource, result in changes of this resource at processes using this resource as well.
The internal propagation rules are:
1) Changes of an input flow result in an equivalent change to the corresponding input flow of the sub-processes.
2) Changes of an output flow result in an equivalent change to the corresponding output flow of the sub-processes.
3) Change to a resource result in equivalent changes to the resources at the subprocesses of the process.
After the changes have been propagated, the user can opt for selecting a process from the "todo" processes. He examines the changes to the processes and decides for example from three options:
1) The changes to the process are not significant, so no further changes are required.
2) The consequences of the process change cannot be determined by the user at the current level of abstraction. He zooms into the process to examine the impact on a more detailed level.
3) The user applies his expertise to make additional changes to the process which are necessary due to the propagated change. Again, these additional changes are propagated through the model.
This model change session proceeds until all necessary changes have been applied and no more "todo" processes are left. The information of the necessary changes due to the initial model change is the impact of this change. The flow diagram of figure 3 displays the impact method in a flowchart.

A best mode embodiment of a knowledge-based system of the present invention is described herebelow. A software source code is developed in an object oriented rapid application environment for WINDOWS, DELPHI. The model has been implemented as an object structure. The impact methods has been implemented as methods of these objects. An objectmodel of the procesmodel is used as a basis for the installed base. A basic object of the model is named TIBModel. Other objects for other parts of the procesmodel are detailed. Impact analysis is executed through methods of the basic object. This can be shown in the code as {imp}.

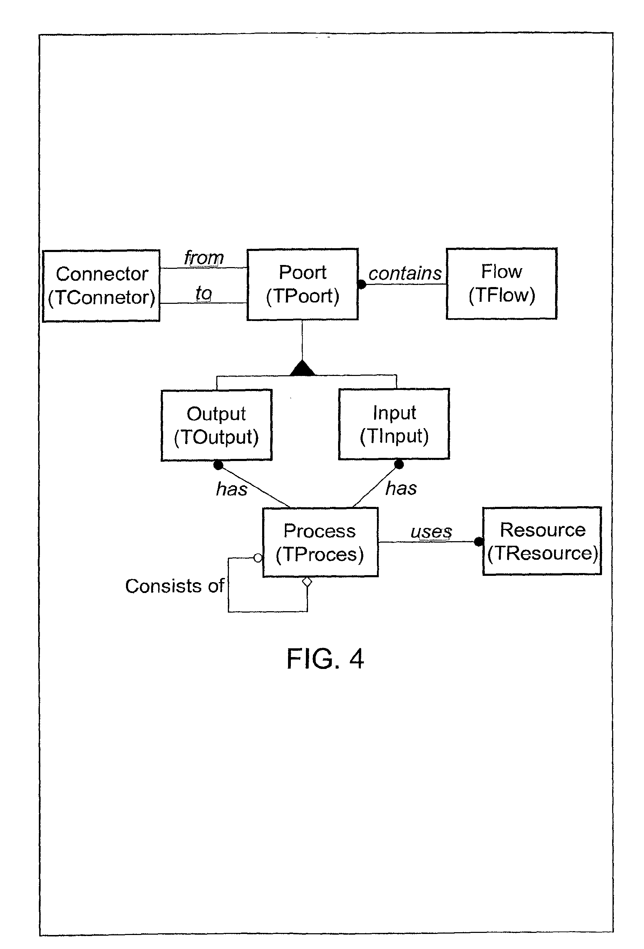

Figure 4 shows an object model of the knowledge-based system of the invention. The following objects are defined:
- TProces:: Object representing a process in the model
- TResource:: Object representing a resource in the model
- TPoort:: A handle on the process for an input- or output flow
- TInput:: A handle on the process for an input flow
- TOutput:: A handle on the process for an output flow
- TFlow:: Object representing the flow of information of a TPoort object
A source code sample showing the part of the source code of the knowledge-based system that is responsible for propagating model changes is given in the sequel. Changes are modelled as TChange objects. Two types of changes are distinguished :
1) wtPoort: changes to an input or output flow of a process
2) wtResource: changes to a resource
The "propagate" method propagates the change through the process model. Two directions are distinguished:
1) diInternal: Internal propagation to the sub-processes of the process.
2) diExternal: External propagation to other processes.
Dependent on the type of change, the methods "proppoort" and "propresource" are called for the actual propagation. 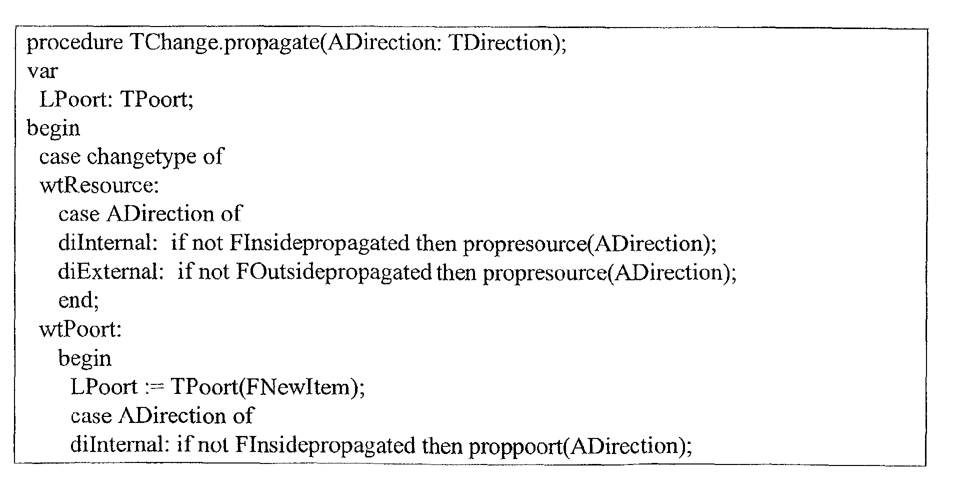 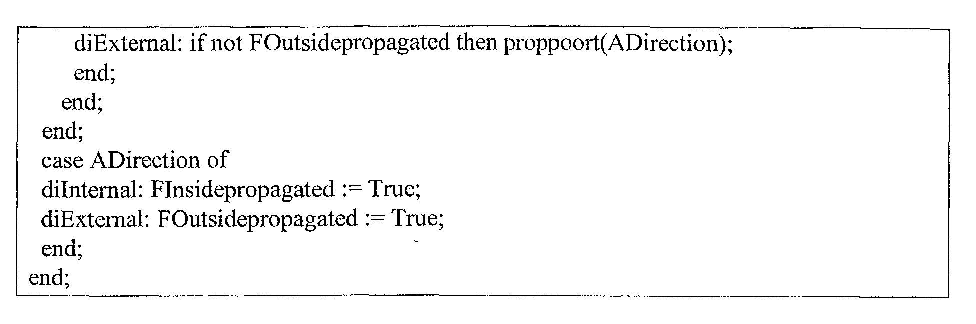 Below, the "proppoort" method is discussed in more detail. A change is implemented by means of two models: the original object ( FOlditem ) and the changed object ( FNewItem ). 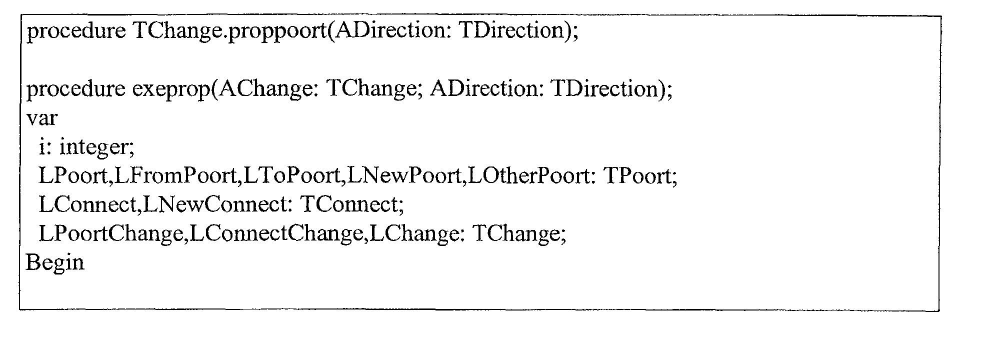 Before the change is propagated, the propagation of this change is registered to prevent repeated propagation of the same change. 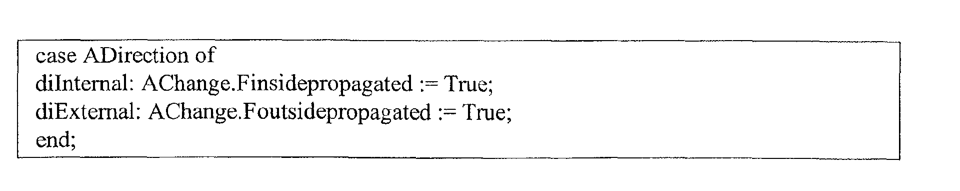 Next, the flow handle ( LToPoort ) connected to the flow handle of the change at hand ( LFromPoort ) is determined.

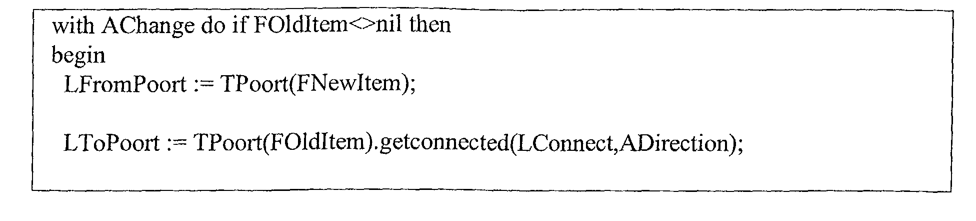

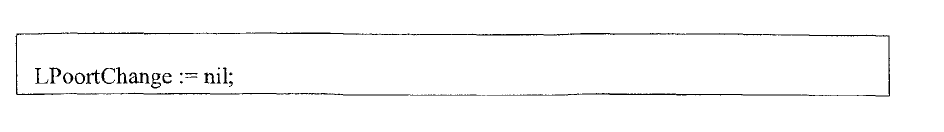

Consequently, a copy of the connection (LNewConnect) and the connected flow handle (LNewPoort) are made for storing the changes. By means of these copies a change object of the changed flow handle ( LPoortChange ) and the changed connection ( LConnectChange ) are made. 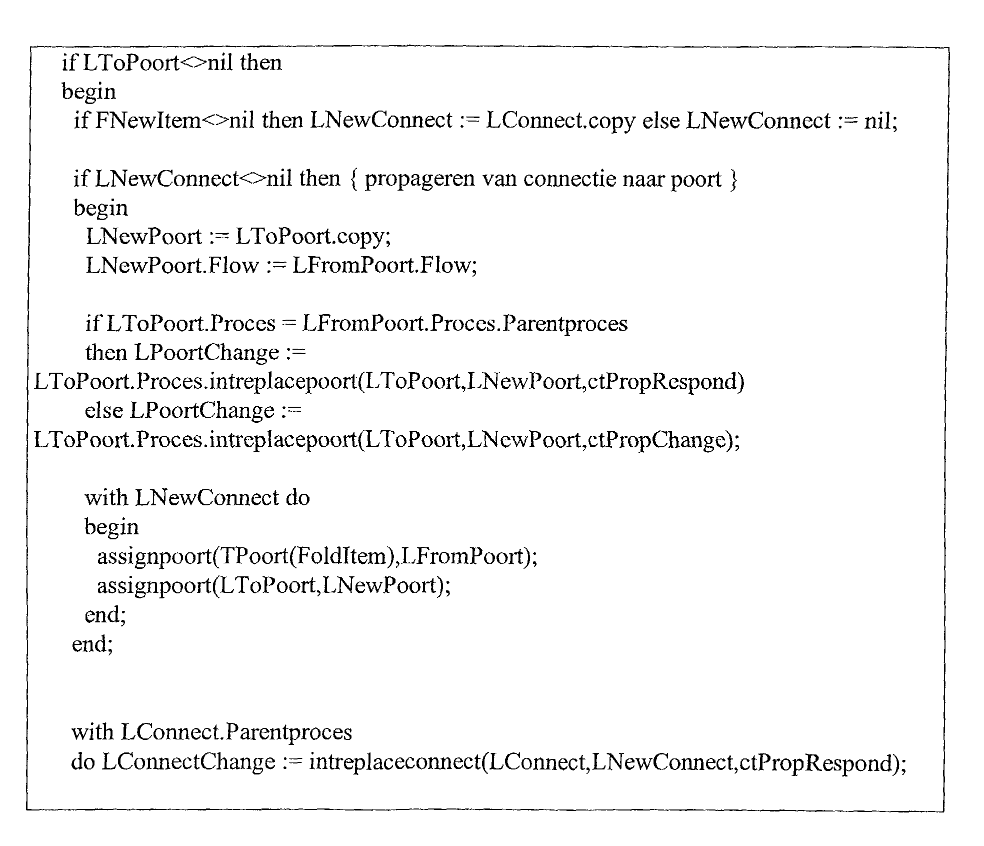 The calls to the "addtrigger" methods register that the connect change ( LConnectChange ) is a result of the port change being propagated, and the propagated port change (LPoortChange) is a result of the connect change ( LConnectChange ). This information is stored to be able to justify the changes that have been made. 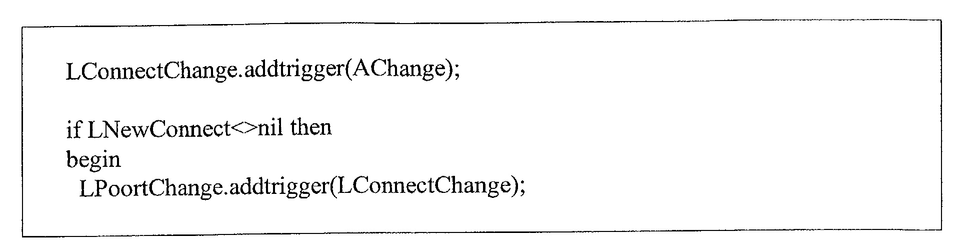 For the propagated change, the propagations are registered to prevent the algorithm from looping back to the current change and end up in an endless loop. 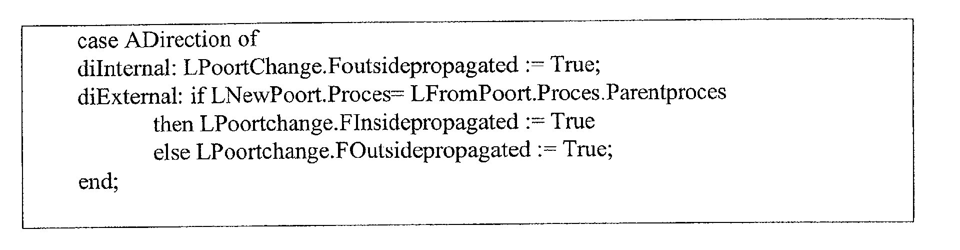 The propagated change ( LPoortChange ) can now be Further propagated to other connected flow handles. 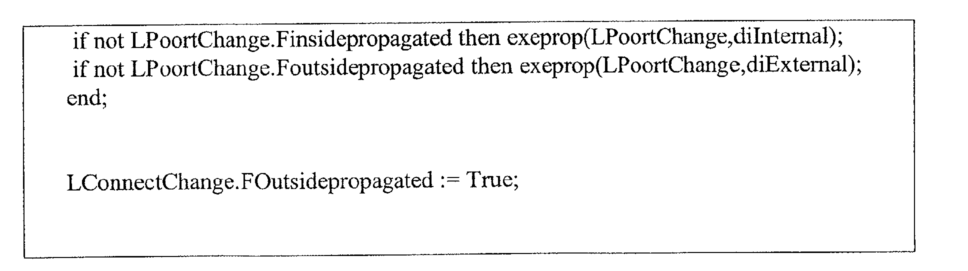 Next, it is tried to automatically propagate the change (LPoortchange) through the process. This is only possible in the circumstance that the input flow and output flow of a process are identical ( unaffected by the process ). 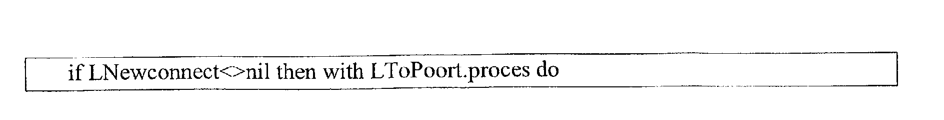 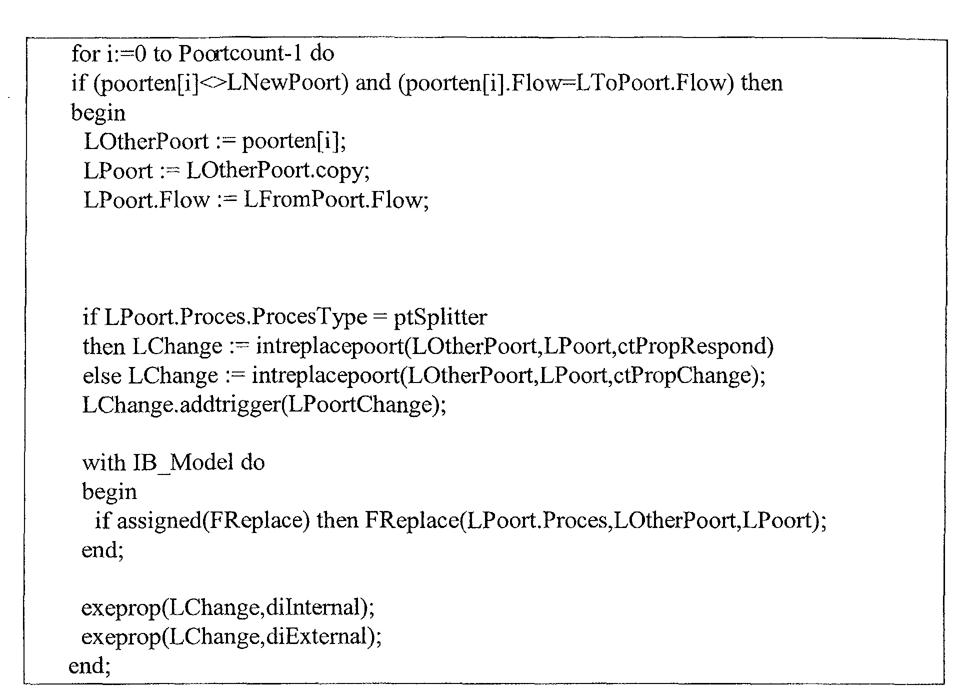 The "FReplace" method generate events which are used by the display system to visualize the changes made to the model objects so changes and their status can be displayed in different colours.

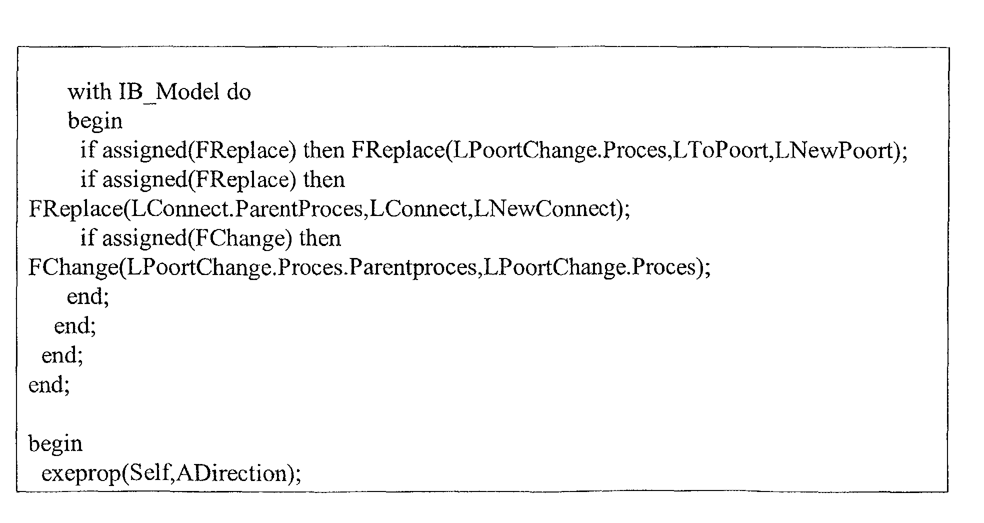

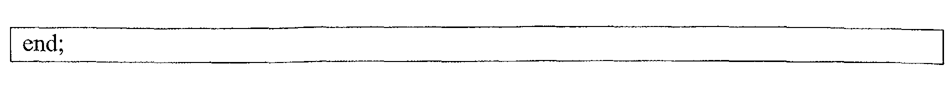

An example of the functionality offered by the whole software package of the best mode embodiment of the invention is described in the sequel as a description of the functionality of a prototype software CAIA (Computer Augmented Impact Analysis).

Differences between CAIA and the BPR-tools mentioned in the article "Business process re-engineering (BPR) - A study of the software tools currently available" - P. Bradley et al, Computers in Industry, Vol 25. No. 3, 1 March 1995, pp. 309-330 can be illustrated by filling out the same check-list as used for these tools, with respect to user features (table 6), modeling capabilities (table 7), and analysis capabilities (table 9).

### Table 6 (page 328):

- *Decision support:* contrary to the tools listed in "Business process re-engineering (BPR)-A study of the software tools currently available" - P. Bradley et al, Computers in Industry, Vol 25. No. 3, 1 March 1995, pp. 309-330, CAIA is typically intended as a decision support system. Based on the changes specified by a user, CAIA determines the scope of the impact by indicating processes involved and the type of impact.

### Table 7 (page 329):

- *Model integrity analysis:* CAIA inherently supports analysis of model integrity, based on the above mentioned functional (de)composition rules.
- *Front end analysis:* similarly, CAIA checks the logic of the model being built, without the need for simulation runs.

### Table 9 (page 329):

- *Reasoning:* as explained above, the main mechanism for impact analysis in CAIA is reasoning.
- *Backward*/*forward chaining:* used in CAIA to determine the logical consequences of changes in the resources, flows and/or processes in a model.

### Functionality of CAIA : The following core modes of use are included :

1) *edit mode.* This mode allows processes and the connections between them to be graphically entered, edited and/or deleted. It can also be indicated that a process uses certain resources and descriptions of the processes and information streams can be entered.
2) *browse mode.* In the browse mode it is possible to browse through the graphical models by means of simple mouse actions and also to retrieve information regarding processes and resources.
3) *impact mode.* In this mode, CAIA offers support when determining the chain of all (present) processes which can logically have an impact on the IB due to the following types of modification:
   - changes to existing information streams, processes and/or resources
   - adding or deleting information streams, processes and/or resources

Another feature of the impact mode is the automatic generation by CAIA of short textual reports relating to the impact session.

CAIA is intended as a single-user, stand-alone tool. This means, amongst other things, that saved information should also be usable outside of the impact mode. For these reasons, the first two CAIA modes can also be used independently (except for additions or modifications within the impact mode), in order to save or retrieve information relating to elements from the installed base (IB).

In each of these modes it is also possible to zoom in and out in order to view processes in greater or less detail as necessary. This is an important means of keeping the focus as targeted as possible during the various modes and during impact determination in particular. In this way, an impact analyst can extract the relevant information in clear 'fragments', without losing the overview of the relationship with other parts.

Another valuable facility within the impact mode of CAIA is the possibility of returning to decisions made earlier during an impact session, without having to perform the whole session again. CAIA keeps a history of the various changes which have been successively implemented. In this way, all decisions can be stored and reused up to the point from which the impact analyst wishes to review them.

### Model elements :

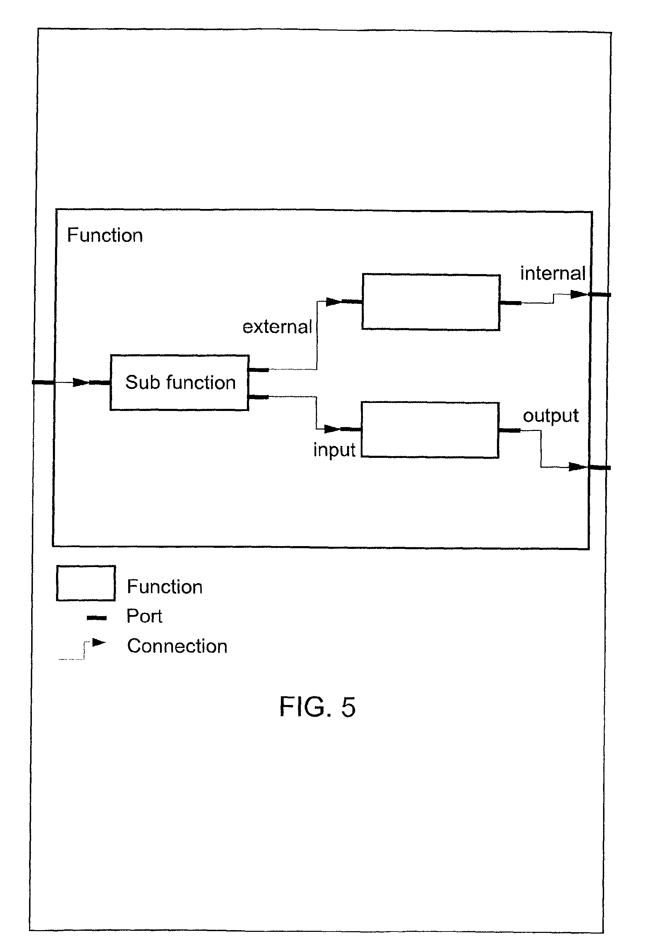

The following terminology will be used in the sequel to refer to the elements of these models: (see figure 5)
- *process:* A transformation of incoming flows into outgoing flows assisted by a number of resources.
- *port:* point at which a flow enters or leaves a process.
- *flow:* Information stream
- *connection:* Connection between two ports
- *resource:* An information system, a human resource or an infrastructure element.

The modelling also has three special 'processes':
- *splitter.* A splitter divides a signal into equivalent sub-signals.
- *composer.* A composer merges a number of sub-signals into one compound signal (plug).
- *decomposer.* A decomposer divides a compound signal into sub-signals (inverse plug).

The core modes are made available in CAIA in three ways:
- *browse:* for browsing through process models
- *edit:* for modifying process models
- *impact:* for performing impact analyses

The CAIA screen can be roughly divided up into 5 sections.
1. *Main menu:* A menu with *File, Edit*, ...is visible at the very top of the screen. Most actions can be initiated using this menu. Each menu item has sub-item. The execution of an action via the menu is shown as *(Menu item\Sub-item)* in this manual.
2. *Speed button bar:* Under the menu is a bar with a number of so-called speed buttons. These are intended for executing certain commands from the menu more quickly.
3. *Process decomposition:* On the left, there is a screen in which the decomposition of processes into sub-processes is visible as a tree.
4. *Graphical editor:* On the right (the largest screen) there is a graphical editor in which the sub-processes, resources, ports and connections between the sub-processes of *one* process can be seen.
5. *Information bar:* An information bar can be found at the bottom of the screen.

Once CAIA has been opened, a choice can be made between entering a new process model (*File\New process model)* or loading an existing model (*File\Open process model).* When creating a new model, CAIA will automatically switch to edit mode and when loading a model it will switch to browse mode.

If there is no model present in the editor, the current model should be closed (*File\Close process model)* before creating a new model or opening another model.

A process model can be saved under a specific name by using the *Save process model as* item in the *File* menu. If the model already has a name, using *File\Save process model* (or the shortcut *Ctrl-S*) will suffice.

The CAIA browser and edit can be switched between easily. The desired one can be selected using the menu items *Model\Browse* and *Model\Edit* or the corresponding speed buttons.

The CAIA impact mode can be activated by starting a new impact analysis (*Impact\Start session)* or by loading an existing impact analysis (*Impact\Open session).* If an impact analysis is started up from a process model in the editor\browser, CAIA will switch to the browse mode with the original model once the impact session has been ended.

To examine the modeality of the CAIA browse , it is best to load an existing model.

If the mouse is pointed at the various elements of the model, information regarding these elements will appear in the status bar at the bottom of the screen.

If a process is involved, the path leading from the main process to the sub-process will be displayed. When displaying a connection, the flow will appear along with the process where the flow originates and terminates. A port indication and the flow of this port will be displayed if a port is involved.

Zooming in on a sub-process can be done by selecting the menu item (*Zoom\Zoom in)* or using the speed button with the torch created for this purpose. The cursor will then be transformed into a torch. By clicking on the sub-process to be zoomed in on in the graphical editor, the screen will zoom in. Another way of zooming in is by double-clicking on the sub-process.

Zooming out is performed using the menu item *(Zoom\Zoom out)* or the speed button with the torch which was created for this purpose. Another way of zooming out is by double-clicking on the 'enclosing' process in the graphical editor.

In addition to zooming in and out, a specific process can be loaded into the graphical editor by clicking on the process decomposition with the right-hand mouse button.

The resources belonging to a process can be displayed by clicking on the process with the right-hand mouse button. A pop-up menu will appear. The *resources* item should be selected from this menu. By clicking on this menu item again, the resources will disappear (check box).

It is also possible to display the resources of each process by default using the menu item *(Zoom \Resources*).

The information which has been saved for a process can be displayed by clicking on the process in the graphical editor with the right-hand mouse button. A pop-up menu will appear. The menu item *process information viewer* should be selected from this menu. The entire modeal description can be displayed by pressing the memo editor button, which will start up the *memo editor.* The screens can be closed again with the OK buttons.

The flow belonging to a port of a process can be viewed by clicking on the port concerned with the right-hand mouse button. A pop-up menu from which the *Port viewer* item should be selected will appear.

A screen will now appear detailing the name of the process, the port designation, the name of the flow and a description of the flow. This description can be viewed in the memo editor using the *memo editor* button.

An overview of all flows can also be shown using *the flow library* (*Windows\Flows*). *A* screen will now appear with a list of all flows on the left. By selecting a flow, an overview of the information relating to this flow will appear on the right.

Information concerning a resource can be retrieved by using the right-hand mouse button to click on the resource under the process in the graphical editor. A pop-up menu will appear from which the *resource library* can be opened with the *resource viewer* item. This contains information relating to the relevant resource (the same result is achieved by double-clicking on the resource).

An overview of all flows can also be viewed with the *resource library* by selecting the menu item *Windows\Resources*. A screen will now appear with a list of all resources on the left. If a resource is selected, an overview of the details of this resource will appear on the right.

By clicking on a connection with the right-hand mouse button, a pop-up menu will appear in the graphical editor. The type of connection is visible here. It is also possible to open the flow library with the flow belonging to the connection from this menu.

The process model loaded in the graphical editor can also be exported as a bitmap by using the *Model\Generate bitmap* menu item.

When the CAIA edit mode is selected, a number of extra speed buttons will appear in the speed button bar. The edit menu will also be available.

Three sub-modes can be selected in the edit:
- *select mode:* Most editing actions can be performed in this mode.
- *connect mode:* Connections between ports can only be made in this mode.
- *delete mode:* Processes, connections and ports can be deleted in this mode.

The modes can be selected with *Edit\Select mode, Edit\Connect mode* and *Edit\Delete mode.* Speed buttons have also been created for selecting the desired sub-mode.

The *Esc* key can always be used to switch to the select mode.

In the select mode of the edit mode, information which can only be retrieved in the browse mode can also be edited.

Fields can be edited by clicking on them with the mouse and changing their contents using the standard Windows method.

It is convenient to open the memo editor for editing description fields. This editor supports standard Windows edit commands such as selecting blocks and cutting and pasting.

In general, an edit action can be undone using the *cancel* button and the changes can be implemented in the model using the *OK* button.

Editing process information can be done as follows:

The *process editor* can be executed via the same pop-up menu with which the browse mode process information is retrieved *(process editor* menu item).

A screen displaying the process information will appear. Both the name and the description can be changed.

Changes are implemented with the *OK* button and can be undone with the *cancel* button.

Attributing a flow to a port can be done as follows:

A flow can be attributed to a specific port by starting up *the port editor* via the pop-up menu of the port.

Another flow can be attributed to a port in the *port editor* by selecting the desired flow from a so-called 'drop-down menu'. It should be noted that the editor automatically attributes the same flow to other possibly connected ports in order to keep the model consistent!

In order to edit the flow of a port manually, the *flow library* should be opened using the *library button.* The flow can then be edited according to the method described below.

Editing flow information can be done as follows:

By starting up the flow *library* (*Window\Flows*), a flow can be selected and the name and description (preferably in terms of the attributes from which the flow is built up) can be changed.

Editing resource information can be done as follows:

Information over resources can be edited in the *resource library* (*Windows\Resources*) including all information fields relating to the resource. The type of resource cannot be changed however.

The *resource library* can also be opened from a process in the graphical editor via the corresponding pop-up menu or by double-clicking on the relevant resource.

Attributing resources ca be done as follows:

Attributing resources to a process can be done through a special dialog box which can be opened from the pop-up menu of a process (*Attributing resources).* A screen will appear with a list of attributed resources on the left and a list of available resources on the right.

The resource is attributed to the process by selecting a resource from the lists of available resources, and then clicking on the arrow button pointing to the left. A resource can be removed from a process by selecting a resource from the lists of available resources, and then clicking on the arrow button pointing to the right.

The *resource library* can be opened from the 'Attribute resources' dialog box in order to add/delete or edit them before attributing them.

Connection type can be done as follows:

The type of connection can be entered by clicking on it with the right-hand mouse button. The choices are as follows:
- *default:* for a normal information stream
- *request:* for an information stream through which the 'host' process is requested.
- *confirm:* for an instruction which must be completed by the 'host' process.

If the 'request' and 'confirm' types are used, the completion signals and signals which request certain information do not have to be modelled explicitly (therefore fewer flows).

The graphical display of the process model can be modified according to personal preferences using the mouse in the graphical editor.

Resizing and relocating processes can be done as follows:

Processes can be moved across the screen by clicking on the process with the left-hand mouse button and keeping it pressed. When the mouse button is released, the process will be placed at this position.

The processes are selected by clicking on the left-hand mouse button and eight so-called 'resize handles' will appear around the process. The size of the process can be altered by clicking on these handles with the left-hand mouse button and dragging them with the button pressed in. When the mouse button is released, the process will be redisplayed with new dimensions.

It is also possible to relocate several processes simultaneously. Extra processes are selected by keeping the *Shift* key pressed and clicking on them.

Relocating ports can be done as follows:

The position of a port in relation to other ports of a process can be changed by selecting it with the left-hand mouse button and dragging it to the desired new location. The mouse button should then be released.

Resizing connections can be done as follows:

The graphical display of a connection can be changed by moving the connecting lines. When the mouse is moved over the connection, the cursor will change and indicate which resize action is possible for that line segment. The line segment can be selected by clicking on it with the left-hand mouse button and keeping this pressed. It can be placed in the desired position by releasing the mouse button.

Inserting processes (select mode) can de done as follows:

Processes are added to the model by clicking on the *Process* item in the *Edit* menu. If an 'enclosing' process has not yet been entered, this will now be created and the *process editor* will appear so that information relating to the process can be entered.

The insert action can be undone with the *cancel* button or implemented with the *OK* button.

The 3 special elements can be inserted into a model, just as with the processes:
- *splitter:* for splitting a flow. This is used to send the output of a process to several other processes.
- *decomposer*: for dividing a flow into sub-flows.
- *composer:* for merging sub-flows into a compound flow.

The *Edit\Splitter, Edit\Decomposer* and *Edit\Composer* menu items are used for inserting these elements.

The speed buttons in the speed button bar can also be used for inserting processes and special elements.

Inserting resources (select mode) can be done as follows:

New resources can be inserted via the *resource library* (Window\Resources) with the *insert* button. The source can be allocated a name, description and type. Extra information fields for the source type concerned will become visible when the type of source has been selected.

The insert action can be undone with the *cancel* button or implemented with the *OK* button.

Inserting processes and flows (select mode) can be done as follows:

Inputs and processes can be inserted into the process via the pop-up menu using the menu item *Insert input* and *Insert output.* A new flow can also be created with the *resource library* button and this can then be attributed.

The attribution action can be undone with the *cancel* button or implemented with the *OK* button.

Inserting connections (connect mode) can be done as follows:

Ports which have not yet been connected can be added in connect mode. The port from which the connection is made should be selected with the left-hand mouse button. The cursor should be moved to the port to which the connection should lead by keeping the mouse button pressed. The connection is added by releasing the mouse button.

Deleting resources can be done as follows:

Resources can be deleted from the *resource library (Window\Resources)*. The resource to be deleted should first be selected and then deleted with the *delete* button.

Deleting flows can be done as follows:

Flows can be deleted from *the flow library*. The flow to be deleted should first be selected and then deleted with the *delete* button.

Deleting processes, connections and ports (delete mode) can be done as follows:

By clicking on a connection, process or port with the left-hand mouse button in the graphical editor when in delete mode, the element will be deleted. Confirmation will be requested from the user before the element is deleted.

Connections can always be deleted without any problems. If ports are deleted, the connections to these ports will also be deleted. If a process is deleted, its ports and any subprocesses will also be deleted.

A basic cut and paste facility has been added for moving entire branches in the hierarchy.

A selection of processes and connections can be selected by holding down the *Shift* key during the selection. The relevant processes can be deleted with *Edit\Cut* or *Ctrl-X*. The editor can then be used to return to the process under which the deleted processes should be placed. The deleted items can be pasted using *Edit\Paste* or *Ctrl-V.*

It is also possible to select all processes and connections in the graphical editor at once with the menu item *Edit\Select All.*

CAIA can check various aspects of the consistency of a process model. In the graphical editor, the consistency of the current process can be checked via the menu item *Model\Check process consistency.* The entire model can be checked using the menu item *Model\Check consistency of entire model.*

A list of inconsistencies will appear if the model is inconsistent. The following inconsistencies will be checked:
- loose ports: ports which are not connected to others.
- non-attributed resources: a process with an attributed resource which has not been attributed to one of the sub-processes of this process.

Starting and stopping impact sessions can be done as follows: An impact session can be started up in the edit or browse mode with the menu item. CAIA is now in impact mode. An impact session is ended with the menu item *Impact\Stop session.* When closing an impact session, the system will ask whether the session should be saved.

Another way of entering impact mode is by directly loading a saved impact session as described below.

An impact session can only be started if the process model is consistent.

Saving and loading impact sessions can be done as follows:

Impact sessions can be saved at any point and loaded again later.

An impact session can be saved with the menu item *Impact\Save session as*. If the session already has a name, it can be saved with *Impact\Save session.*

An impact session can be loaded using the menu item *Impact\Open session.*

When loading and saving, an impact session will be saved/loaded along with the model of the IB. In this way, the impact session is always linked to the version of the IB on which the session was started.

Implementing changes and responding to changes can be done as follows:

During an impact analysis, changes can be made to the IB model. CAIA propagates these changes through the IB on the basis of two mechanisms:
- connectivity: If the flow from a port is changed, this change will be propagated to the connected process.
- shared resources: If a process resource is changed, this change will be propagated to other processes using this resource.

In this way, the parts of the IB affected by changes can be systematically recorded. These changes can then be responded to with new changes in order to determine the indirect impact. CAIA records what has been changed, which of these changes the user responded to and which changes have not yet received a response.

The changes are centred around processes. A process can be changed by means of a transaction on this process. A transaction is a selection of editing actions describing the complete desired change (or response to a change) to a process . A transaction should be explicitly started and ended. Transactions can be nested by starting a transaction on a subprocess within a transaction on a process. The impact is displayed graphically by assigning each process a colour. Processes have the following colours:
- grey: the process is the active process being edited
- red: the process has been edited as a result of changes to other processes.
- blue: the process has been edited. Any impact has been responded to.
- green: the process has been edited but is not consistent in terms of sub-processes (pending). The reason for the this can be:
   1. incomplete impact at a deeper level
   2. loose ports at a deeper level
   3. non-attributed resources at a deeper level.

Specifying a change can be done as follows: A transaction on a process can be initiated by selecting *Specify change* from the pop-up menu of a process.

The process on which the transaction has been started will turn grey and is the active process. The ways in which the active process can be changed are described in the following section.

Changes to the active process can be done as follows:

The following changes can be made to a process during a transaction:
- changing the name and process description: the name and description of a process can be changed in the same way as in the edit mode with the menu item *Edit process information (impact)* in the process pop-up menu
- changing the flow of a port: the description of the flow of a port can be changed with the menu item *Edit flow (impact)* in the process pop-up menu.
- changing a process resource: a resource can be changed in the resource library with the menu item *Edit resource (impact)*. A note can be saved with the change with the *Impact note* button.
- inserting/deleting ports: ports can be added to/deleted from a process in the usual manner.
- inserting/deleting resources: resources can be attributed to/deleted from a process in the usual manner.
- inserting/deleting processes and connections: if the enclosing process is the active process in the editor, processes, connections and sub-processes can be inserted and deleted in the usual manner.
   As with resource changes, a note or even a cost and effort estimate can also be attached to other changes.

Once a change has been entered, it will be propagated by the IB model and the impact of this change will be determined in this way. Processes affected will turn red and will be placed in the impact bar.

Changes can only be performed in the active process. Zooming out is therefore sometimes first necessary in order to make responses/new changes possible.

Closing a transaction can be done as follows:

Once the changes have been implemented, the transaction can be closed with the *Ready* menu item from the pop-up menu of the active process. The transaction changes can be undone with the *Cancel* menu item. If an active process is zoomed out of, any tiansaction on this process will automatically be closed.

It is also possible to start a transaction on the sub-process of the active process during a transaction. The first transaction can only be closed once any sub-processes have been closed.

Responding to changes can be done as follows:

Once changes have been made in the IB, the propagated changes can be responded to. If the process is red or green, the menu item *Respond to change* should be selected from the process pop-up menu. This starts a response transaction on the process in question and the active process can be edited as described in the previous section.

There are two ways of responding to propagated changes:
- *external:* The user translates the changes to ports and resources of the process into logical and necessary changes to other ports and resources of the process (the decomposition in sub-processes is therefore not considered).
   This response method is necessary for basic processes (processes without sub-processes) but can also be applied to compound processes so that a detailed impact analysis is not necessary for 'known' cases.
- *internal:* The user translates the changes outside the process into necessary changes within the process. Just as when making initial changes, response transactions can be started on sub-processes as part of a response transaction.

If a process has turned red as a result of propagated changes, but these changes have no impact, this can be indicated with the menu item *No impact* in the process pop-up menu.

Response transactions are closed in the same way as regular editing transactions with the menu item *Ready* in the process pop-up menu or by zooming out.

Inserting notes along with changes can be done as follows:

In addition to the changes themselves, a note can be inserted with each change to a process with the menu item *Impact* in the process pop-up menu. A list of changes will appear from which a change can be selected.

The following information can be added along with the change in the edit fields:
- detailed description of the change.
- estimate of the costs of the change.
- estimate of the necessary effort for the change.

This information is inserted when an is impact report printed .

Overview of changes and undoing changes can be done as follows:

With the *Impact* menu item in the pop-up menu of a process, an overview of the changes made to the process (or resource) concerned can be obtained in addition to inserting notes:

The following information can be requested by clicking on a change in the list:
- an indication as to whether an initial change, a response or an automatic change is involved.
- a list of triggers or causes of the change and a list of responses of the change
- an indication as to whether the change has been responded to.

The impact bar can be done as follows: The so-called impact bar can be displayed using the menu item *Analysis\Impact bar.* The impact bar provides an overview of the active process, the processes yet to be examined (coloured red) and the pending (coloured green) processes.

This process can be zoomed in on with the editor by double-clicking on the process in the bar.

The impact bar can be kept in view for the duration of the impact session and can be closed/opened at any time.

If there are no longer any processes in the impact bar, all impact has, in theory, been examined once. If there are no longer any green processes in the impact bar, the impact analysis has been carried out in detail.

Generating an impact report can be done as follows:

The results of an impact session can be printed in report form using the menu item *Impact\Generate*. The report will be saved as a text file. This text file can then be opened and printed in any word processing program or editor.

Using impact results as a new IB model can be done as follows:

A new IB model will be constructed when performing an impact session with CAIA. The result of an impact session can be saved as an IB model and loaded again in the browser/editor (*Impact\Save session as process model).*

Only the result of the session is saved is the process model version of the impact session. The changes, and accompanying notes, that have led to the new model are no longer accessible.

## Claims

1. A knowledge-based system compiled on a computer environment or stored on a memory carrier, the knowledge-based system comprising
a representation of at least one business service and said representation including a representation of the business processes within said service and a representation of resources needed for executing said business processes, said representation further including a representation of the communication between said processes ; and
means for analyzing an impact of a model change in at least one of said processes and/or in at least one of resources and/or in at least one of said communication on at least one other of said processes and/or said resources and/or said communication or interdependency.

2. The knowledge-based system as recited in claim 1 wherein the processes are composed of subprocesses with communication there between.

3. The knowledge-based system as recited in claim 2 wherein the communication and interdependency between said processes is represented as a set of input/output functions in/out each of said processes, and optionally in/out each of said subprocesses.

4. The knowledge-based system as recited in claim 3 wherein the output function of essentially each process or subprocess is coupled to the input function of another process or subprocess.

5. The knowledge-based system as recited in claim 3 wherein the output function of essentially each process or subprocess is the input function of another process or subprocess.

6. The knowledge-based system as recited in claim 3 wherein the output function of essentially each process or subprocess is a function of the input function of said process or subprocess.

7. The knowledge-based system as recited in claim 3 wherein the input and output function of essentially each process are preserved as the input and output function of subprocesses of said process.

8. The knowledge-based system as recited in claim 3 wherein the communication and interdependency between said processes, and/or optionally said subprocesses, is represented as a flow with attributes over a connection between the representation of said processes, and/or optionally said subprocesses, the flow entering or leaving one of said processes, and/or optionally one of said subprocesses, over a port, the port being an input port or an output port.

9. The knowledge-based system as recited in claim 3 wherein said means for analyzing the impact of a model change contain means for propagating the model change throughout said representation according to model consistency rules.

10. The knowledge-based system as recited in claim 9 wherein the changes in an output function or input function may result in changes in a connected input function, resp. output function, preferably as determined by the user of the system.

11. The knowledge-based system as recited in claim 9 wherein essentially all the changes in the representation resulting from the model change are subsequently or at the same time indicated on a user interface connected to said knowledge based system.

12. The knowledge-based system as recited in claim 9 wherein said model change is one of the group of modifications, additions or deletions of an input/output function, modifications, additions or deletions of a business process and/or subprocesses, modifications, additions or deletions of resources.

13. The knowledge-based system as recited in claim 1 further comprising means for storing at least one status of said business service.

14. The knowledge-based system as recited in claim 1 wherein said knowledge-based system is implemented in an object oriented programming environment and wherein said business processes are represented as objects.

15. The knowledge-based system as recited in claim 14 wherein at least part of said objects are refinements of a basic object.

16. A method of designing a business service, the method comprising the steps of :
representing the business processes within said service and the resources needed for executing said business processes ; and
representing the communication between said processes as a set of input/output functions in/out each of said processes, and wherein the input function of essentially each process is coupled to the output function of another process.

17. The method as recited in claim 16 wherein the input function of essentially each process is the output function of another process.

18. The method as recited in claim 16 further comprising the steps of determining at least one status of said service by inputting a set of parameters in said functions, and storing the resulting status of said service.

19. The method as recited in claim 16 further comprising the step of propagating impact of a model change in at least one of said processes and/or in at least one of said resources and/or in at least one of said communication on at least one other of said processes and/or said resources and/or said communication.

20. The method as recited in claim 16 further comprising the step of verifying and/or analyzing an impact of a model change in at least one of said processes and/or in at least one of said resources and/or in at least one of said communication on at least one other of said processes and/or said resources and/or said communication.

21. The Method as recited in claim 20 further comprising the step of determining that one or more model changes will be required to maintain consistency of the model and/or might be required for reasons of practical functioning of the model.

22. A method of supporting the analysis of business processes and/or resources as part of a business service, the method comprising the steps of:
representing the business processes within said service and the resources needed for executing said business processes ; and
representing the communication between said processes as a set of input/output functions in/out each of said processes, and wherein the input function of essentially each process is the output function of another process ; and
comparing a first and a second status of said business service, said first and said second status being determined through inputting a set of parameters in said functions prior to and after a business model change.
